(19) Europäisches Patentamt / European Patent Office / Office européen des brevets

(11) **EP 3 911 531 B1**

(12) **FASCICULE DE BREVET EUROPEEN**

(45) Date de publication et mention de la délivrance du brevet:
**05.03.2025 Bulletin 2025/10**

(21) Numéro de dépôt: **20701154.5**

(22) Date de dépôt: **14.01.2020**

(51) Classification Internationale des Brevets (IPC):
**B60K 6/48** *(2007.10)*      **B60W 10/06** *(2006.01)*
**B60W 10/08** *(2006.01)*      **B60K 6/547** *(2007.10)*

(52) Classification Coopérative des Brevets (CPC):
**B60W 20/40; B60K 6/48; B60K 6/547;
B60W 10/06; B60W 10/08; B60W 20/11;
B60W 30/188; B60W 50/0097;** B60W 2520/10;
B60W 2520/105; Y02T 10/62; Y02T 10/72

(86) Numéro de dépôt international:
**PCT/EP2020/050801**

(87) Numéro de publication internationale:
**WO 2020/148273 (23.07.2020 Gazette 2020/30)**

(54) **PROCEDE DE CONTROLE DU DEMARRAGE D'UN MOTEUR THERMIQUE DANS UN GROUPE MOTOPROPULSEUR HYBRIDE**

VERFAHREN ZUR STEUERUNG DES STARTVORGANGS EINER BRENNKRAFTMASCHINE IN EINEM HYBRIDANTRIEBSSTRANG

METHOD FOR CONTROLLING THE STARTING OF AN INTERNAL COMBUSTION ENGINE IN A HYBRID POWERTRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.01.2019 FR 1900422**

(43) Date de publication de la demande:
**24.11.2021 Bulletin 2021/47**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeur: **LEFEVRE, Aurelien**
  **92340 Bourg la Reine (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
**EP-A1- 2 226 227      EP-A1- 3 299 236
EP-A2- 1 772 301      US-B1- 9 327 722**

**Description**

La présente invention se rapporte à la commande des groupes motopropulseurs hybrides.

Plus précisément, elle a pour objet un procédé d'anticipation du démarrage d'un moteur thermique dans un groupe motopropulseur (GMP) de véhicule hybride comportant au moins un moteur thermique et une machine électrique, lors du passage de sa chaîne de traction d'un d'état courant purement électrique sur un deuxième état cible susceptible de nécessiter le démarrage du moteur thermique pour satisfaire la requête de force à la roue du conducteur. Document US9327722B1 divulgue un procédé de contrôle pour un groupe motopropulseur hybride.

Certains groupes motopropulseurs hybrides, possédant une boîte à rapports discrets, disposent d'un moteur thermique et d'au moins un moteur électrique permettant de combiner de façon multiple, des rapports de transmission du couple d'origine thermique et des rapports de transmission du couple d'origine électrique. Chaque combinaison opérationnelle d'un « *rapport thermique* » et d'un *« rapport électrique »,* définit un « état » de la chaîne cinématique du groupe motopropulseur, de type

- purement électrique : seule la machine électrique est reliée aux roues,
- purement thermique : seul le moteur thermique est relié aux roues, ou
- hybride : la machine électrique et le moteur thermique sont reliés aux roues.

Les états purement électriques sont privilégiés pour utiliser l'énergie stockée dans la batterie. Le moteur électrique est alors relié aux roues, tandis que le moteur thermique ne l'est pas, et est coupé (non démarré). Sur un rapport courant électrique établi, il se peut que le conducteur, ou une fonction de conduite (par exemple un régulateur de vitesse), augmente la requête de couple au GMP, au point de le faire basculer sur un état hybride pour bénéficier en plus de la puissance du moteur thermique. Le passage d'un état électrique à un état hybride, requiert le démarrage du moteur thermique. Le temps nécessaire au démarrage du moteur thermique influe directement sur la qualité de passage. Sa réduction est primordiale pour l'agrément de conduite, ainsi que pour la réactivité du véhicule.

Par la publication FR 2 882 698, on connaît un procédé de décollage rapide d'un véhicule hybride à l'arrêt : on fait décoller le véhicule sur la machine électrique à son couple maximum en isolant le moteur thermique de la chaîne thermique pendant le temps nécessaire au démarrage, avant d'introduire le couple du moteur thermique dans la chaîne cinématique.

La publication EP 1 970 240 décrit une autre méthode de démarrage du moteur thermique en mode hybride. Cette méthode utilise, comme la précédente, des embrayages de coupure pour isoler temporairement le moteur thermique, pendant sa période de démarrage.

La présente invention vise à réduire ou éliminer le temps nécessaire au démarrage du moteur thermique, lors d'un passage d'un état électrique vers un état hybride, en anticipant le démarrage du moteur thermique pour améliorer les performances du véhicule.

Dans ce but, elle prévoit que :

- on compare la force maximale que peut produire la branche électrique de la chaîne de traction sur chacun des états électriques cible du GMP, à la force que doit satisfaire chacun de ces états, pour être choisi ou maintenu comme état cible, et
- on impose au moteur thermique une requête de démarrage anticipé, si aucun des états électriques cible n'est capable de satisfaire la requête de force du conducteur.

De préférence, on crée deux booléens pour chaque état électrique cible, le premier prenant la valeur un si l'état cible est jugé incapable de satisfaire la demande de couple du conducteur, et le deuxième prenant la valeur un si l'état cible est jugé capable de satisfaire cette demande.

La stratégie développée établit opportunément une requête de démarrage anticipée du moteur thermique, afin de réduire, voire d'annuler l'effet du temps de démarrage du moteur thermique sur la durée de passage d'un état électrique vers un état hybride. Cette requête est émise en amont de la demande de changement d'état chaîne cinématique, sous la responsabilité d'une autre fonction, pour que le moteur thermique soit déjà opérationnel au moment du passage sur l'état hybride.

Elle est principalement élaborée à partir :

- du temps nécessaire au démarrage du moteur thermique,
- de la puissance maximale délivrable par le moteur électrique, et
- du couple maximal délivrable par la machine électrique.

Les principaux avantages de la méthode sont le peu de paramètres de réglage nécessaires, et le gain de mémoire qui en résulte. La mise au point du véhicule est simplifiée. La stratégie proposée est transversale. Elle peut être adaptée sur tout véhicule hybride avec une transmission automatique à rapports discrets et au moins un état de chaîne de traction électrique.

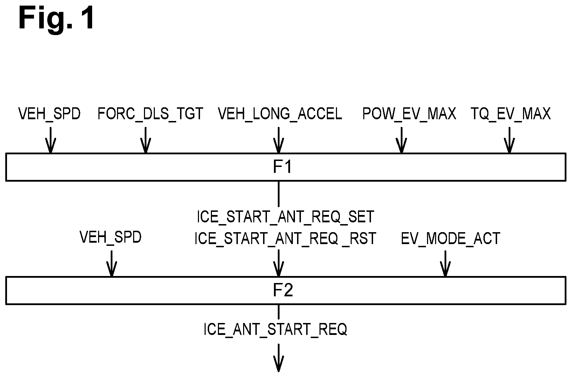

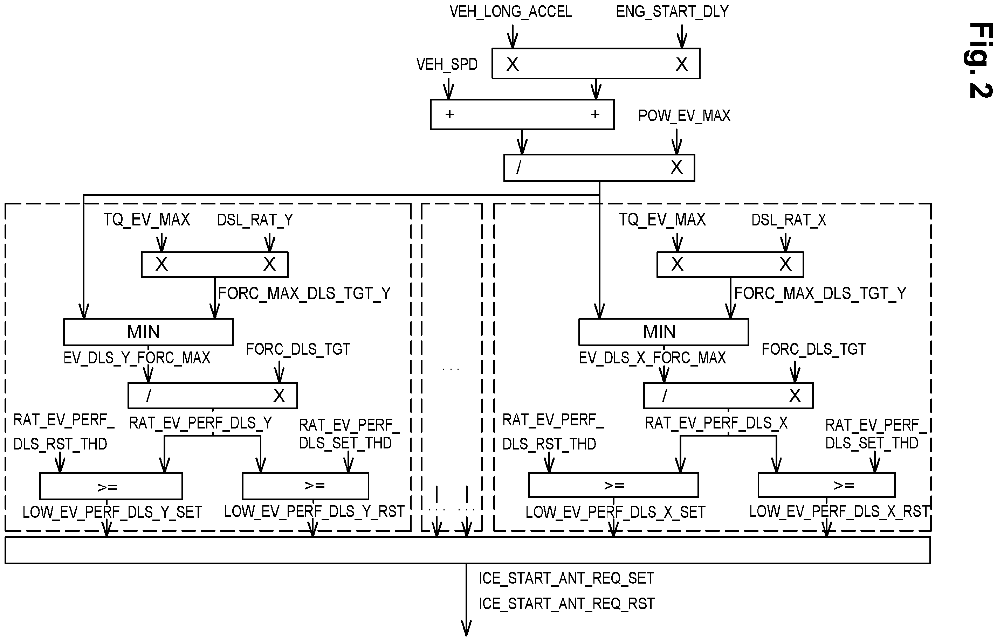

La présente invention sera mieux comprise à la lecture de la description suivante d'un mode de réalisation non limitatif de celle-ci, en se reportant aux dessins annexés, sur lesquels [Fig. 1] est un logigramme de la stratégie développée, et [Fig. 2] décrit la Fonction F1 de la figure 1.

La fonction F1 permet de déterminer si une requête de démarrage anticipé du moteur thermique doit être activée ou désactivée, en fonction des critères physiques du groupe motopropulseur. Elle émet des requêtes brutes de démarrage anticipé. Ces requêtes permettent d'anticiper le démarrage d'un moteur thermique dans un groupe motopropulseur (GMP) de véhicule hybride comportant au moins un moteur thermique et une machine électrique, lors du passage de sa chaîne de traction d'un d'état courant purement électrique sur un deuxième état cible susceptible de nécessiter le démarrage du moteur thermique pour satisfaire la requête de force à la roue du conducteur.

Tout d'abord, on calcule une vitesse anticipée correspondant à la vitesse véhicule à laquelle serait démarré le moteur si une requête de démarrage était émise à l'instant. Elle se nomme $VEH\_SPD\_ANT$. La vitesse anticipée du véhicule au démarrage du moteur thermique, est fonction de la vitesse du véhicule, du temps de démarrage du moteur thermique, et de l'accélération longitudinale du véhicule. Elle se calcule de la manière suivante :

$$VEH\_SPD\_ANT = VEH\_SPD + ENG\_START\_DLY * VEH\_LONG\_ACCEL.$$

Dans ce calcul,

- $VEH\_SPD$ est la vitesse véhicule courante,
- $ENG\_START\_DLY$ est le temps de démarrage du moteur thermique, paramètre calibré, qui peut dépendre de la température d'eau du moteur thermique, et
- $VEH\_LONG\_ACCEL$ est l'accélération longitudinale courante du véhicule.

On calcule alors une valeur de force maximale à la roue pour chacun des états de la chaîne de traction électrique. La force maximale à la roue est égale au minimum entre la puissance maximale que peut fournir la machine électrique dans sa zone d'iso puissance, sur la vitesse anticipée du véhicule au démarrage du moteur thermique, et le produit du couple maximal que peut fournir la machine électrique du GMP dans sa zone d'iso couple par le rapport global de transmission permettant de transformer le couple maximal de la machine électrique en équivalent de force à la roue. Elle se nomme $EV\_DLS\_X\_FORC\_MAX$, et se calcule de la manière suivante : $EV\_DLS\_X\_FORC\_MAX = MIN (POW\_EV\_MAX/VEH\_SPD\_ANT, TQ\_EV\_MAX*DLS\_RAT\_X)$, avec

- $POW\_EV\_MAX$ pour la puissance maximale que peut fournir la machine électrique sur sa zone d'iso puissance (cette donnée peut être paramétrée ou fournie par une fonction tierce),
- $TQ\_EV\_MAX$ pour le couple maximal que peut fournir la machine électrique sur sa zone d'iso couple (cette donnée peut être paramétrée ou fournie par une fonction tierce),
- $VEH\_SPD\_ANT$ pour la vitesse anticipée calculée précédemment,
- $DLS\_RAT\_X$ pour le ratio global de transmission permettant de transformer le couple maximal de la machine électrique en équivalent de force à la roue (donnée paramétrée).

Pour chacun des états de la chaîne de traction électrique, la force $EV\_DLS\_X\_FORC\_MAX$ est ensuite comparée à une requête de force $FORC\_DLS\_TGT$, qui est la force à la roue que doit satisfaire un état de chaîne cinématique électrique pour être choisi ou maintenu comme état cible courant de la boîte. Cette comparaison permet de définir un ratio pour chacun des états électriques. Ce ratio est nommé $RAT\_EV\_PERF\_DLS\_X$. Il représente la capacité de l'état visé à satisfaire la requête de force à la roue $FORC\_DLS\_TGT$, comparativement à la performance maximale possible $EV\_DLS\_X\_FORC\_MAX$ de l'état concerné, à la vitesse anticipée calculée en amont de la stratégie.

Le ratio $RAT\_EV\_PERF\_DLS\_X$ est calculé comme suit :
$RAT\_EV\_PERF\_DLS\_X = FORC\_DLS\_TGT / EV\_DLS\_X\_FORC\_MAX$. Le ratio $RAT\_EV\_PERF\_DLS\_X$ est inférieur à 1, si l'état visé est capable de fournir plus de force que ne le requiert la requête de force à la roue, et supérieur à 1 dans le cas contraire. Il est comparé à un premier seuil $RAT\_EV\_PERF\_DLS\_SET\_THD$, au-dessus duquel on considère que l'état de la chaîne cinématique électrique concerné ne permettra pas d'assurer la performance recherchée, si bien qu'il risque d'impliquer le choix d'un état cible hybride.

Le ratio $RAT\_EV\_PERF\_DLS\_X$ est également comparé à un deuxième seuil $RAT\_EV\_PERF\_DLS\_RST\_THD$, inférieur au premier, en dessous duquel on considère que l'état chaîne cinématique électrique concerné assurera assez de performance, ce qui signifie qu'il sera conservé comme état cible, alors que dans le cas contraire il serait écarté.

A partir de ce ratio, on crée deux booléens pour chaque état électrique cible, *LOW_EV_PERF_DLS_X_SET* et *LOW_EV_PERF_DLS_X_RST* :

- si *RAT_EV_PERF_DLS_X* est supérieur ou égal au premier seuil *RAT_EV_PERF_DLS_SET_THD*, alors *LOW_EV_PERF_DLS_X_SET* = 1
- si *RAT_EV_PERF_DLS_X* est inférieur au deuxième seuil, *RAT_EV_PERF_DLS_RST_THD,* alors *LOW_EV_PERF_DLS_X_RST* = 1

Dans ces conditions :

- le premier booléen, *LOW_EV_PERF_DLS_X_SET* prend la valeur un si le rapport de la force nécessaire pour satisfaire la requête de force à la roue du conducteur sur la force potentielle maximale sur l'état électrique ciblé, est supérieur au premier seuil, car l'état cible est alors jugé incapable de satisfaire la demande de couple du conducteur, et
- le deuxième booléen *LOW_EV_PERF_DLS_X_RST* prend la valeur un si le rapport de la force nécessaire pour satisfaire la requête de force à la roue du conducteur sur la force potentielle maximale sur l'état électrique ciblé, est inférieur ou égal au deuxième seuil, car l'état cible est alors jugé capable de satisfaire cette demande.

On crée un troisième booléen *ICE_START_ANT_REQ_SET* qui prend la valeur un si tous les premiers booléens *LOW_EV_PERF_DLS_X_SET* sont à la valeur un. Dans ces conditions, aucun état de cible électrique n'est capable de satisfaire la requête de force à la roue, de sorte qu'un état hybride va être choisi. Le changement d'état prévu est précédé du démarrage anticipé du moteur thermique.

On crée un quatrième booléen *ICE_START_ANT_REQ_RST,* qui prend la valeur un, si un des booléens *LOW_EV_PERF_DLS_RST* est à la valeur un. Dans ces conditions, au moins un état cible électrique est capable de satisfaire la requête de force à la roue. L'état cible restera électrique. L'anticipation d'un éventuel démarrage du moteur thermique n'est pas nécessaire.

En résumé,

- on compare la force maximale que peut produire la branche électrique de la chaîne de traction sur chacun des états électriques cible du GMP, à la force que doit satisfaire chacun d'eux pour être choisi ou maintenu comme état cible, et
- on impose au moteur thermique une requête de démarrage anticipé, si aucun des états électriques cible n'est capable de satisfaire la requête de force du conducteur.

La fonction F2 a pour but de consolider les requêtes brutes d'anticipation du démarrage du moteur thermique *ICE_START_ANT_REQ_SET* et *ICE_START_ANT_REQ_RST.* Au cours de cette étape, une requête de démarrage anticipé du moteur thermique, nommée *ICE_START_ANT_REQ,* devient effective, si l'ensemble des paramètres suivants sont respectés :

- le booléen *ICE_START_ANT_REQ_SET* est à un,
- aucun mode de fonctionnement véhicule purement électrique du véhicule ou du GMP, n'est requis par le conducteur, et
- le moteur thermique n'est ni démarré, ni en cours de démarrage.

Elle devient ineffective si une des conditions suivantes est vraie :

- le booléen *ICE_START_ANT_REQ_RST* est à 1,
- un mode de fonctionnement du véhicule purement électrique interdisant de fait le démarrage du moteur thermique, est requis par le conducteur,
- le moteur thermique est démarré.

La requête de démarrage anticipée du moteur thermique ainsi élaborée et appliquée, permet de démarrer le moteur thermique au moment où un état hybride sera choisi pour cible. Le temps nécessaire au démarrage est donc supprimé dans le temps global de réalisation du nouvel état. Cette anticipation améliore de manière significative la réactivité du véhicule aux requêtes du conducteur.

## EP 3 911 531 B1

### Revendications

1. Procédé d'anticipation du démarrage d'un moteur thermique dans un groupe motopropulseur (GMP) de véhicule hybride comportant au moins un moteur thermique et une machine électrique, lors du passage de sa chaîne de traction d'un d'état courant purement électrique sur un deuxième état cible susceptible de nécessiter le démarrage du moteur thermique pour satisfaire la requête de force à la roue du conducteur, selon lequel

   - on compare la force maximale que peut produire la branche électrique de la chaîne de traction sur chacun des états électriques cible du GMP, à la force que doit satisfaire chacun d'eux pour être choisi ou maintenu comme état cible, et
   - on impose au moteur thermique une requête de démarrage anticipé, si aucun des états électriques cible n'est capable de satisfaire la requête de force du conducteur,
   - on crée deux booléens pour chaque état électrique cible, le premier prenant la valeur un si l'état cible est jugé incapable de satisfaire la demande de couple du conducteur, et le deuxième booléen prenant la valeur un, si l'état cible est jugé capable de satisfaire cette demande,
   - on crée un troisième booléen qui prend la valeur un, si tous les premiers booléens sont égaux à un, et
   - on crée un quatrième booléen, qui prend la valeur un si au moins un des deuxièmes booléens est à un,

   **caractérisé en ce que**

   - la requête de démarrage anticipé devient effective, si le troisième booléen est à un, aucun mode de fonctionnement purement électrique du GMP n'est demandé par le conducteur, et le moteur thermique n'est ni démarré, ni en cours de démarrage, et **en ce que**
   - la requête de démarrage anticipé devient ineffective si une des conditions suivantes est vraie :

      - le quatrième booléen est égal à un,
      - un mode de fonctionnement du GMP purement électrique est requis par le conducteur,
      - le moteur thermique est démarré.

2. Procédé d'anticipation selon la revendication 1, **caractérisé en ce que** le premier booléen prend la valeur un si le rapport de la force nécessaire pour satisfaire la requête de force à la roue du conducteur sur la force potentielle maximale sur l'état électrique ciblé, est supérieur à un.

3. Procédé d'anticipation selon la revendication 1 ou 2, **caractérisé en ce que** le deuxième booléen prend la valeur un si le rapport de la force nécessaire pour satisfaire la requête de force à la roue du conducteur sur la force potentielle maximale sur l'état électrique ciblé, est inférieur ou égal à un deuxième seuil.

4. Procédé d'anticipation selon la revendication 3, **caractérisé en ce que** la force maximale à la roue est égale au minimum entre la puissance maximale que peut fournir la machine électrique dans sa zone d'iso puissance sur la vitesse anticipée du véhicule au démarrage du moteur thermique, et le produit du couple maximal que peut fournir la machine électrique du GMP dans sa zone d'iso couple par le rapport global de transmission permettant de transformer le couple maximal de la machine électrique en équivalent de force à la roue.

5. Procédé d'anticipation selon la revendication 4, **caractérisé en ce que** la vitesse anticipée du véhicule au démarrage du moteur thermique, est fonction de la vitesse du véhicule, du temps de démarrage du moteur thermique, et de l'accélération longitudinale du véhicule.

### Patentansprüche

1. Verfahren zur Antizipation des Starts eines Verbrennungsmotors in einem Antriebsstrang (GMP) eines Hybridfahrzeugs, der mindestens einen Verbrennungsmotor und eine elektrische Maschine aufweist, beim Übergang seines Antriebs von einem aktuellen rein elektrischen Zustand in einen zweiten Zielzustand, der den Start des Verbrennungsmotors erfordern kann, um die Anforderung von Kraft am Rad des Fahrers zu erfüllen, gemäß dem

   - die maximale Kraft, die der elektrische Zweig des Antriebs in jedem der elektrischen Zielzustände des GMP erzeugen kann, mit der Kraft verglichen wird, die jeder von ihnen erfüllen muss, um als Zielzustand gewählt oder beibehalten zu werden, und

- dem Verbrennungsmotor eine Anforderung eines antizipierten Starts auferlegt wird, wenn keiner der elektrischen Zielzustände fähig ist, die Kraftanforderung des Fahrers zu erfüllen,
- zwei Booleans für jeden elektrischen Zielzustand erzeugt werden, wobei der erste den Wert eins annimmt, wenn ein Zielzustand als unfähig erachtet wird, die Drehmomentforderung des Fahrers zu erfüllen, und der zweite Boolean den Wert eins annimmt, wenn der Zielzustand als fähig erachtet wird, diese Forderung zu erfüllen,
- ein dritter Boolean erzeugt wird, der den Wert eins annimmt, wenn alle ersten Booleans gleich eins sind, und
- ein vierter Boolean erzeugt wird, der den Wert eins annimmt, wenn mindestens einer der zweiten Booleans auf eins ist,
**dadurch gekennzeichnet, dass**
- die Anforderung eines antizipierten Starts wirksam wird, wenn der dritte Boolean auf eins ist, keine rein elektrische Betriebsart des GMP vom Fahrer gefordert wird, und der Verbrennungsmotor weder gestartet ist noch gerade gestartet wird,
und dass
- die Anforderung eines antizipierten Start unwirksam wird, wenn eine der folgenden Bedingungen wahr ist:

    - der vierte Boolean ist gleich eins,
    - eine rein elektrische Betriebsart des GMP wird vom Fahrer angefordert,
    - der Verbrennungsmotor ist gestartet.

2. Antizipationsverfahren nach Anspruch 1, **dadurch gekennzeichnet, dass** der erste Boolean den Wert eins annimmt, wenn das Verhältnis der notwendigen Kraft, um die Kraftanforderung am Rad des Fahrers zu erfüllen, zur potenziellen maximalen Kraft im elektrischen Zielzustand höher als eins ist.

3. Antizipationsverfahren nach Anspruch 1 oder 2, **dadurch gekennzeichnet, dass** der zweite Boolean den Wert eins annimmt, wenn das Verhältnis der notwendigen Kraft, um die Kraftanforderung am Rad des Fahrers zu erfüllen, zur potenziellen maximalen Kraft im elektrischen Zielzustand geringer als eine oder gleich einer zweiten Schwelle ist.

4. Antizipationsverfahren nach Anspruch 3, **dadurch gekennzeichnet, dass** die maximale Kraft am Rad gleich dem Minimum zwischen der maximalen Leistung, die die elektrische Maschine in ihrem Iso-Leistungsbereich auf der antizipierten Geschwindigkeit des Fahrzeugs beim Start des Verbrennungsmotors liefern kann, und dem Produkt des maximalen Drehmoments ist, das die elektrische Maschine des GMP in ihrem Iso-Drehmoment-Bereich durch das globale Übersetzungsverhältnis liefern kann, das es ermöglicht, das maximale Drehmoment der elektrischen Maschine in ein Kraftäquivalent am Rad umzuwandeln.

5. Antizipationsverfahren nach Anspruch 4, **dadurch gekennzeichnet, dass** die antizipierte Geschwindigkeit des Fahrzeugs beim Start des Verbrennungsmotors von der Geschwindigkeit des Fahrzeugs, der Startzeit des Verbrennungsmotors und der Längsbeschleunigung des Fahrzeugs abhängt.

## Claims

1. Method for anticipating the starting of a thermal engine in a powertrain (GMP) of a hybrid vehicle comprising at least one thermal engine and one electric machine, when its drivechain goes from a current purely electric state to a second target state likely to require the starting of the thermal engine in order to satisfy the request for force at the wheel from the driver, according to which

    - the maximum force that can be produced by the electric branch of the drivechain on each of the target electric states of the GMP is compared with the force that each of them must satisfy in order to be chosen or maintained as target state, and
    - a request for anticipated starting is imposed on the thermal engine if none of the target electric states is capable of satisfying the force request from the driver,
    - two Booleans are created for each target electric state, the first taking the value one if the target state is judged incapable of satisfying the torque demand from the driver, and the second Boolean taking the value one, if the target state is judged capable of satisfying this demand,
    - a third Boolean is created which takes the value one if all the first Booleans are equal to one, and
    - a fourth Boolean is created which takes the value one if at least one of the second Booleans is at one,
    **characterized in that**
    - the request for anticipated starting becomes effective, if the third Boolean is at one, no purely electric mode of operation of the GMP is requested by the driver, and the thermal engine is neither started nor is in the process of being started, and **in that**
- the request for anticipated starting becomes ineffective if one of the following conditions is true:

     - the fourth Boolean is equal to one,
     - a purely electric mode of operation of the GMP is requested by the driver,
     - the thermal engine is started.

2. Anticipation method according to Claim 1, **characterized in that** the first Boolean takes the value one if the ratio of the force needed in order to satisfy the request for force at the wheel from the driver over the maximum potential force in the targeted electric state is greater than one.

3. Anticipation method according to Claim 1 or 2, **characterized in that** the second Boolean takes the value one if the ratio of the force needed in order to satisfy the request for force at the wheel from the driver over the maximum potential force in the targeted electric state is less than or equal to a second threshold.

4. Anticipation method according to Claim 3, **characterized in that** the maximum force at the wheel is equal to the minimum between the maximum power that the electric machine can supply within its iso power region over the anticipated speed of the vehicle at the starting of the thermal engine, and the product of the maximum torque that the electric machine of the GMP can supply within its iso torque region times the overall transmission ratio allowing the maximum torque of the electric machine to be transformed into an equivalent of force at the wheel.

5. Anticipation method according to Claim 4, **characterized in that** the anticipated speed of the vehicle at the starting of the thermal engine is a function of the speed of the vehicle, of the time for starting the thermal engine, and of the longitudinal acceleration of the vehicle.

# Fig. 1

VEH_SPD    FORC_DLS_TGT    VEH_LONG_ACCEL    POW_EV_MAX   TQ_EV_MAX

| F1 |

ICE_START_ANT_REQ_SET

VEH_SPD    ICE_START_ANT_REQ_RST   EV_MODE_ACT

| F2 |

ICE_ANT_START_REQ

# Fig. 2

## RÉFÉRENCES CITÉES DANS LA DESCRIPTION

**Documents brevets cités dans la description**

- US 9327722 B1
- FR 2882698
- EP 1970240 A